(19) Europäisches Patentamt
European Patent Office
Office européen des brevets

(11) **EP 4 470 771 A1**

(12) **EUROPEAN PATENT APPLICATION**
published in accordance with Art. 153(4) EPC

(43) Date of publication:
**04.12.2024 Bulletin 2024/49**

(21) Application number: 23746866.5

(22) Date of filing: **20.01.2023**

(51) International Patent Classification (IPC):
*B32B 27/00* (2006.01)     *B32B 27/36* (2006.01)
*B65D 75/62* (2006.01)     *B29C 61/02* (2006.01)
*B29C 61/06* (2006.01)     *C08J 9/00* (2006.01)
*C08J 5/18* (2006.01)

(52) Cooperative Patent Classification (CPC):
B29C 61/02; B29C 61/06; B32B 27/00;
B32B 27/36; B65D 75/58; C08J 5/18; C08J 9/00

(86) International application number:
**PCT/JP2023/001765**

(87) International publication number:
**WO 2023/145653 (03.08.2023 Gazette 2023/31)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **25.01.2022  JP 2022009439**

(71) Applicant: **Toyobo Co., Ltd.
Kita-ku
Osaka-shi, Osaka 530-0001 (JP)**

(72) Inventors:
• **YAMAZAKI, Atsuro
  Inuyama-shi, Aichi 484-8508 (JP)**
• **ISHIMARU, Shintaro
  Inuyama-shi, Aichi 484-8508 (JP)**

(74) Representative: **Vossius & Partner
Patentanwälte Rechtsanwälte mbB
Siebertstrasse 3
81675 München (DE)**

(54)     **HEAT SHRINKABLE WHITE POLYESTER FILM**

(57)     The present invention aims to provide a heat shrinkable white polyester film which has good and high perforated line openability if fitted as a label, while achieving good label appearance when fitted; and a label.

A heat shrinkable white polyester-based film comprising a polyester-based resin having ethylene terephthalate as a main constituent component and containing one or more monomer components that can become amorphous components in an amount of 13 mol% or more of in an entire polyester resin composition, and satisfying the following requirements (1) to (6):
(1) the film has a hot water heat shrinkage rate of 0% or more and 15% or less in a longitudinal direction of the film when treated in 98°C hot water for 10 seconds;
(2) the film has a hot water heat shrinkage rate of 50% or more and 80% or less in a width direction of the film when treated in 98°C hot water for 10 seconds;
(3) the film has a trans conformation ratio of 0.3 or more and 0.65 or less in a longitudinal direction, which is a non-shrinkage direction of the film, when a ratio A1/A2 of an absorbance A1 at 1340 cm$^{-1}$ relative to an absorbance A2 at 1410 cm$^{-1}$ of the heat shrinkable polyester-based film measured by a polarized ATR-FTIR method is defined as a trans conformation ratio;
(4) the film has a total light transmittance of 10% or more and 40% or less;
(5) the film has a tensile elongation at break in the longitudinal direction at 1000 mm/min of 70% or more and 300% or less after the film is shrunk by 20% in the width direction in a hot-air oven;
(6) the film has a distortion index of the molecular orientation angle of 0 degrees or more and 15 degrees or less.

EP 4 470 771 A1

**Description**

TECHNICAL FIELD

The present invention relates to a heat shrinkable white polyester-based film, a heat shrinkable white polyester-based label, and a packaging body using the heat shrinkable white polyester-based film or label. More specifically, the present invention relates to a heat shrinkable white polyester-based film that has light cutting properties, that is excellent in perforated line openability, and that is suitable for usage as a label, and a label and a packaging body using the heat shrinkable white polyester-based film.

BACKGROUND ART

In recent years, stretched films made of polyvinyl chloride-based resins, polystyrene-based resins, or polyester-based resins have been widely used as heat shrinkable films for label packaging, cap sealing, accumulation packaging, etc., which serve to protect glass bottles, PET bottles, and the like and to display products. Among such films, polyvinyl chloride-based films have problems that, for example, they have low heat resistance, and generate chlorine gas and cause dioxins when incinerated. Meanwhile, polystyrene-based films have problems that they have poor solvent resistance, require use of special composition inks for printing, and need to be incinerated at high temperatures, otherwise, a large amount of black smoke is generated with an offensive odor during incineration. Therefore, polyester-based heat shrinkable films, which have high heat resistance, are easily incinerated, and have excellent solvent resistance, have been widely used.

In addition, from the viewpoint of handling during label production, heat shrinkable films that shrink largely in a width direction have been generally used. Therefore, in order to cause a shrinkage rate in the width direction to be exhibited during heating, conventional heat shrinkable films have been produced by stretching the films at a high stretching ratio in the width direction.

In particular, with respect to containers for beverages, such as dairy products, for which deterioration of contents due to ultraviolet light is a concern, labels that are attached to the containers are required to have high light cutting properties. In addition, when a film is shrunk and attached to a container, in order for the film to cover the container in close contact without any gap from the lower part to the opening of the container, a high heat shrinkage rate is required, and the film needs to be attached while being shrunk at a high temperature.

For example, Patent Literature 1 describes a heat shrinkable white polyester film: that is excellent in light cutting properties since a layer containing titanium oxide is provided as an intermediate layer; in which curling is less likely to occur since the film contains voids; that has a low specific gravity; and that can be extruded at a high speed.

However, the heat shrinkable white polyester film described in Patent Literature 1 is hardly stretched in the longitudinal direction orthogonal to the main shrinkage direction. Therefore, in a case where the film, as a label, is shrunk to cover a PET bottle, when the label is torn along a perforated line, the film is cut off in the middle of opening, and cannot be torn properly (i.e., perforated line openability is poor).

In addition, unlike the production of general biaxially stretched films, it is not possible to increase the speed of the production line by increasing the roll speed during stretching in the longitudinal direction, which poses a problem of poor productivity.

Meanwhile, in order to achieve good perforated line openability of a polyester-based heat shrinkable film, when the film is stretched in the longitudinal direction, the mechanical strength in the longitudinal direction increases and the perforated line openability becomes good, but shrinkage is exhibited in the longitudinal direction. Therefore, in particular, when the film, as a label, is shrunk at a high temperature to cover a PET bottle, the film is largely shrunk also in a direction orthogonal to the circumferential direction of the bottle. Accordingly, distortion is caused in the label, resulting in a very bad appearance.

Patent Literature 2 describes a film, obtained by performing stretching in the longitudinal direction and then performing an intermediate heat treatment at a high temperature, that is excellent in perforated line openability and in which shrinkage in the longitudinal direction is suppressed.

However, when the present inventors studied the method described in Patent Literature 2 above, the following problems were found. When stretching is performed at a high ratio in the longitudinal direction and then heat treatment at a high temperature is performed, bow-shaped distortion (so-called bowing phenomenon) is caused due to shrinkage stress acting in the longitudinal direction, and the molecular orientation angle is largely distorted near an end portion in particular. Therefore, when the heat shrinkable film is shrunk to be used, distortion is caused, resulting in impairing the appearance, or deformation of the distorted portion changes the thickness of the intermediate layer containing a white pigment in the deformed portion, thereby causing unevenness in the light transmitting property and the color of the appearance in the distorted portion.

CITATION LIST

PATENT LITERATURE

[PTL 1] Japanese Patent No. 6519720
[PTL 2] Japanese Patent No. 5637272

SUMMARY OF THE INVENTION

PROBLEMS TO BE SOLVED BY THE INVENTION

The present invention has been made in light of the problems of conventional art described above. That is, an object of the present invention is to provide a heat shrinkable white polyester-based film and a heat shrinkable white polyester-based label that solve the problems of conventional heat shrinkable polyester-based films described above, that have good perforated line openability when attached as a label, and that have good label appearance when attached.
Another object of the present invention is provide a heat shrinkable white polyester film having light cutting properties without being subjected to printing or processing and having an excellent aesthetic appearance.

SOLUTION TO PROBLEM

The present inventors have completed the present invention as a result of studies in order to solve the above problems. That is, the present invention is composed of the followings.

1. A heat shrinkable white polyester-based film comprising a polyester-based resin having ethylene terephthalate as a main constituent component and containing one or more monomer components that can become amorphous components in an amount of 13 mol% or more of in an entire polyester resin composition, and satisfying the following requirements (1) to (6):

(1) the film has a hot water heat shrinkage rate of 0% or more and 15% or less in a longitudinal direction of the film when treated in 98°C hot water for 10 seconds;
(2) the film has a hot water heat shrinkage rate of 50% or more and 80% or less in a width direction of the film when treated in 98°C hot water for 10 seconds;
(3) the film has a trans conformation ratio of 0.3 or more and 0.65 or less in a longitudinal direction, which is a non-shrinkage direction of the film, when a ratio A1/A2 of an absorbance A1 at 1340 $cm^{-1}$ relative to an absorbance A2 at 1410 $cm^{-1}$ of the heat shrinkable polyester-based film measured by a polarized ATR-FTIR method is defined as a trans conformation ratio;
(4) the film has a total light transmittance of 10% or more and 40% or less;
(5) the film has a tensile elongation at break in the longitudinal direction at 1000 mm/min of 70% or more and 300% or less after the film is shrunk by 20% in the width direction in a hot-air oven;
(6) the film has a distortion index of the molecular orientation angle of 0 degrees or more and 15 degrees or less.

2. The heat shrinkable white polyester-based film according to claim 1, wherein

the film has a tear propagation strength in the longitudinal direction of 50 N/mm or less after the film is shrunk by 20% in the width direction in a hot-air oven and
the film has a ratio between tear propagation strengths in the longitudinal direction and the width direction of 1.0 or more and 11.0 or less after the film is shrunk by 20% in the width direction in a hot-air oven.

3. The heat shrinkable white polyester-based film according to claim 1 or 2, wherein
the film has a tensile strength at fracture in the longitudinal direction of 60 MPa or more and 200 MPa or less.
4. The heat shrinkable white polyester-based film according to any one of claims 1 to 3, wherein
the film has a shrinkage stress in the width direction of 2 MPa or more and 18 MPa or less.
5. The heat shrinkable white polyester-based film according to any one of claims 1 to 4, wherein
the film has an apparent specific gravity of 0.9 $cm^3$ or more and 1.3 $g/cm^3$ or less.
6. A label comprising the heat shrinkable white polyester-based film according to any one of claims 1 to 5 as a base material, wherein the label is provided with perforations or a pair of notches.

7. A packaging body formed by covering at least a part of outer periphery of an object with the label according to claim 6 followed by thermally shrinking the label.

ADVANTAGEOUS EFFECTS OF THE INVENTION

The heat shrinkable white polyester film of the present invention is highly shrinkable in the width direction as the main shrinkage direction, has a high mechanical strength in the longitudinal direction orthogonal to the width direction, has good perforated line openability when used as a label, and can be neatly cut along the perforated line from the start of tearing to the end of tearing during opening. Further, the heat shrinkage rate in the longitudinal direction, which is the direction orthogonal to the main shrinkage direction, is low, and twist of the orientation angle is also small. Therefore, when the film, as a label, is heat-shrunk and attached to a bottle or the like, good shrinkage finish with few wrinkles and distortions is realized. In the packaging body of the present invention, tearability of the covering label is good, and the covering label can be neatly torn along the perforated line with a moderate force.

The heat shrinkable white polyester-based film of the present invention is light in weight, excellent in aesthetic appearance, has light cutting properties without being subjected to printing or processing, and has an excellent aesthetic appearance even when being subjected to printing.

In addition, the heat shrinkable white polyester-based film of the present invention has an extremely high adhesive force when the front and back surfaces (or the same surfaces) are adhered to each other with a solvent. Therefore, the heat shrinkable white polyester-based film can be suitably used for various covering labels and the like, including labels for PET bottles, etc.

DESCRIPTION OF EMBODIMENTS

A polyester used in the present invention contains ethylene terephthalate as a main component. That is, the polyester contains ethylene terephthalate in an amount of 50 mol% or more and preferably 60 mol% or more. Examples of another dicarboxylic acid component forming the polyester of the present invention include: aromatic dicarboxylic acids such as isophthalic acid, naphthalene dicarboxylic acid, and orthophthalic acid; aliphatic dicarboxylic acids such as adipic acid, azelaic acid, sebacic acid, and decane dicarboxylic acid; and alicyclic dicarboxylic acids.

When an aliphatic dicarboxylic acid (e.g., adipic acid, sebacic acid, decane dicarboxylic acid, etc.) is contained, the content thereof is preferably less than 3 mol%. In the case of a heat shrinkable polyester-based film obtained by using a polyester containing 3 mol% or more of these aliphatic dicarboxylic acids, the film stiffness is insufficient when attaching the film at a high speed, which is not so preferable.

In addition, preferably, a trivalent or higher polyvalent carboxylic acid (e.g., trimellitic acid, pyromellitic acid, anhydrides thereof, etc.) is not contained. In the case of a heat shrinkable polyester-based film obtained by using a polyester containing such a polyvalent carboxylic acid, a necessary high heat shrinkage rate is less likely to be achieved, which is not so preferable.

Examples of a diol component forming the polyester used in the present invention include aliphatic diols such as ethylene glycol, 1,3-propanediol, 1,4-butanediol, neopentylglycol, and hexanediol; alicyclic diols such as 1,4-cyclohexanedimethanol; aliphatic ether-based diols such as diethylene glycol; and aromatic diols such as bisphenol A.

The polyester used in the heat shrinkable white polyester-based film of the present invention is preferably a polyester whose glass transition point (Tg) is adjusted to 60 to 80°C. For adjustment of the glass transition point, one or more types of cyclic diols such as 1,4-cyclohexanedimethanol, diols (e.g., 1,3-propanediol, 1,4-butanediol, neopentylglycol, hexanediol, etc.) having 3 to 6 carbon atoms, and aliphatic ethers such as diethylene glycol are preferably contained.

In the polyester used in the heat shrinkable white polyester-based film of the present invention, the total amount of one or more types of monomer components that can become amorphous components, in 100 mol% of a polyhydric alcohol component or 100 mol% of a polyvalent carboxylic acid component in the entire polyester resin needs to be 13 mol% or more, and is more preferably 16 mol% or more, further preferably 18 mol% or more, and particularly preferably 20 mol% or more. Here, examples of the monomer that can become an amorphous component include neopentylglycol, 1,4-cyclohexanedimethanol, isophthalic acid, 1,4-cyclohexanedicarboxylic acid, 2,6-naphthalene dicarboxylic acid, 2,2-diethyl 1,3-propanediol, 2-n-butyl 2-ethyl 1,3-propanediol, 2,2-isopropyl 1,3-propanediol, 2,2-di-n-butyl 1,3-propanediol, 1,4-butanediol, and hexanediol diethylene glycol, and among these, neopentylglycol, 1,4-cyclohexanedimethanol, or isophthalic acid is preferably used. However, if the amount of one or more types of monomer components that can become amorphous components is too large, the heat shrinkage properties may become larger than necessary, or the mechanical properties may become insufficient. Therefore, a total of 40 mol% or less is preferable, and a total of 35 mol% or less is further preferable.

Preferably, the polyester used in the heat shrinkable white polyester-based film of the present invention does not contain a diol (e.g., octanediol, etc.) having 8 or more carbon atoms, or a trihydric or higher polyhydric alcohol (e.g., trimethylolpropane, trimethylolethane, glycerin, diglycerin, etc.). In the case of a heat shrinkable white polyester-based film obtained by using a polyester containing the above diol or polyhydric alcohol, a necessary high heat shrinkage rate is less likely to be achieved.

In addition, the polyester used in the heat shrinkable white polyester-based film of the present invention preferably does not contain triethylene glycol or polyethylene glycol as much as possible.

To the resin forming the heat shrinkable white polyester-based film of the present invention, various additives, for example, waxes, antioxidants, antistatic agents, crystal nucleating agents, viscosity reducers, heat stabilizers, pigments for coloring, anti-coloring agents, UV absorbers, etc. can be added as necessary. Preferably, fine particles as a lubricant are added to the resin forming the heat shrinkable white polyester-based film of the present invention, to make a polyethylene terephthalate-based resin film have good workability (slipperiness). As the fine particles, any fine particles may be selected, and examples of inorganic fine particles include silica, alumina, titanium dioxide, calcium carbonate, kaolin, and barium sulfate. Examples of organic fine particles include acrylic-based resin particles, melamine resin particles, silicone resin particles, and cross-linked polystyrene particles. The average particle diameter of the fine particles can be selected as appropriate in a range of 0.05 to 3.0 $\mu$m (when measured with a Coulter counter) as necessary.

As a method for blending the above particles into the resin forming the heat shrinkable white polyester-based film, for example, the particles can be added at any stage in the production of the polyester-based resin. However, the fine particles are preferably added as a slurry obtained by dispersing the fine particles in ethylene glycol or the like, at the stage of esterification or at the stage after the end of ester exchange reaction and before the start of polycondensation reaction, to allow the polycondensation reaction to progress. In addition, the fine particles are also preferably blended by a method in which a slurry of the particles dispersed in ethylene glycol, water, or the like and a polyester-based resin raw material are blended by using a kneading extruder equipped with a vent, a method in which dried particles and a polyester-based resin raw material are blended by using a kneading extruder, or the like.

In the present invention, in order to provide the film with light cutting properties by adjusting the total light transmittance of the film to a specific small range, for example, it is suitable to cause the film to contain particles such as inorganic particles or organic particles in an amount of 0.1 to 20 mass% and preferably 1 to 15 mass% with respect to the film mass. When the content of the particles is less than 0.1 mass%, it becomes difficult to obtain sufficient light cutting properties, for example, which is not preferable. Meanwhile, when the content of the particles exceeds 20 mass%, the film strength decreases, for example, and film formation becomes difficult, which is not preferable.

The particles may be added before polyester polymerization, but is usually added after polyester polymerization. The inorganic particles to be added may be, for example: known inert particles such as kaolin, clay, calcium carbonate, silicon oxide, aluminum oxide, titanium oxide, calcium phosphate, or carbon black; or internal particles formed inside a polymer during polyester production due to a high melting point organic compound that is insoluble during melt-film-formation of polyester resin, or a metal compound catalyst, such as an alkali metal compound or an alkaline-earth metal compound, used in synthesis of cross-linked polymer and polyester. Among these, titanium oxide particles are preferable from the viewpoint of providing necessary light cutting properties.

The average particle diameter of the particles contained in the film is in a range of 0.001 to 3.5 $\mu$m. Here, the average particle diameter of the particles is measured by the Coulter counter method. The average particle diameter of the particles is preferably 0.001 $\mu$m or more and 3.5 $\mu$m or less, and more preferably 0.005 $\mu$m or more and 3.0 $\mu$m or less. When the average particle diameter of the particles is less than 0.001 $\mu$m, necessary light cutting properties are difficult to be obtained, for example, which is not preferable. When the average particle diameter of the particles exceeds 3.5 $\mu$m, smoothness of the film surface becomes poor and defects such as printing-omission easily occur, which is not preferable.

In the present invention, in order to adjust the apparent specific gravity, it is preferable to cause the film to contain fine voids, for example. For example, a foaming material or the like may be mixed to perform extrusion, but a preferable method is to mix a non-compatible thermoplastic resin in polyester, and then stretch the resultant mixture in at least one-axis direction to obtain voids. The thermoplastic resin not compatible with the polyester used in the present invention may be any thermoplastic resin, and is not limited in particular as long as the thermoplastic resin is not compatible with polyester. Specific examples thereof include polystyrene-based resins, polyolefin-based resins, polyacrylic-based resins, polycarbonate-based resin, polysulfone-based resins, and cellulose-based resins. In particular, from the viewpoint of formability of voids, polystyrene-based resins or polyolefin-based resins such as polymethylpentene and polypropylene are preferable.

The polystyrene-based resin means a thermoplastic resin containing a polystyrene structure as a basic component, and includes: homopolymers such as atactic polystyrene, syndiotactic polystyrene, and isotactic polystyrene; modified resins, such as high impact polystyrene resins and modified polyphenylene ether resins, obtained through grafting or block copolymerization of other components; and further, mixtures of thermoplastic resins, such as polyphenylene ethers, compatible with these polystyrene-based resins.

The polypropylene-based resin in the present invention includes: homopolymers such as isotactic polypropylene and syndiotactic polypropylene; and modified resins obtained through grafting or block copolymerization of other components.

In preparation of a polymer mixture obtained by mixing the resins not compatible with polyester, for example, chips of each resin may be mixed, melt-kneaded in an extruder, and then extruded, or alternatively, both resins may be kneaded in a kneader in advance, and then further melt-extruded by an extruder. In the polyester polymerization step, a polystyrene-based resin may be added, and chips obtained by stirring and dispersing the resultant matter may be melt-extruded.

With respect to the film in the present invention, preferably, on at least one surface of a layer A containing a large number of voids, a layer B having fewer voids than the layer A is provided. In order to obtain this configuration, preferably, different raw materials A and B are respectively put into different extruders and melted, the resultant matters are attached together in a melted state before a T-die or in the die, the resultant matter is brought into close contact with a cooling roll to be solidified, and then, the resultant matter is stretched by a method described later. At this time, preferably, the amount of the non-compatible resin as the raw material in the layer B, which is the surface layer or one surface of the film, is less than that in the layer A. Accordingly, the layer B has fewer voids and less roughness of the surface, thereby realizing a film at which the aesthetic appearance of printing is not impaired. Since the film has portions having not many voids, the stiffness of the film does not become weak, whereby a film excellent in attachability is obtained.

Further, the heat shrinkable white polyester-based film of the present invention may also be subjected to corona treatment, coating treatment, flame treatment, or the like in order to realize good adhesiveness of the film surface.

When the heat shrinkable white polyester-based film of the present invention is subjected to treatment for 10 seconds in a no-load state in 98°C hot water, the heat shrinkage rate (i.e., 98°C hot-water-temperature heat shrinkage rate) in the longitudinal direction of the film calculated by the following formula (1) from the lengths before and after the shrinkage needs to be 0% or more and 15% or less, and the heat shrinkage rate in the width direction needs to be 50% or more and 80% or less.

Heat shrinkage rate = {(length before shrinkage-length after shrinkage)/length before shrinkage}×100 (%)     formula(1)

In a case where the hot-water-temperature heat shrinkage rate in the longitudinal direction at 98°C is less than 0% (i.e., expansion is caused due to heat treatment), when the film is used as a label for a bottle, good shrunk appearance cannot be obtained, e.g., distortion of the printed pattern occurs, which is not preferable. Conversely, in a case where the hot-water-temperature heat shrinkage rate in the longitudinal direction at 98°C exceeds 15%, when the film is used as a label, bow-shaped distortion easily occurs during heat-shrinkage in the direction orthogonal to the attachment direction, which is not preferable. Therefore, the hot-water-temperature heat shrinkage rate in the longitudinal direction at 98°C is preferably 0% or more and 15% or less, further preferably 1% or more and 10% or less, and more preferably 1% or more and 8% or less. The reason for adopting the measurement temperature of 98°C is the assumption that, when the film is attached as a label for a beverage container or the like that requires light cutting properties, the film is shrunk to be attached by a high temperature steam through a steam tunnel or the like in order to cover the container from the lower part to the opening thereof.

When the heat shrinkable white polyester-based film of the present invention is subjected to treatment for 10 seconds in a no-load state in 98°C hot water, if the hot-water-temperature heat shrinkage rate in the width direction of the film calculated by the above formula (1) from the lengths before and after the shrinkage is less than 50%, wrinkles or sagging is caused in the heat-shrunk label since the shrinkage amount is small, which is not preferable. Conversely, if the hot-water-temperature heat shrinkage rate in the width direction at 98°C is more than 80%, when the film is used as a label, distortion is easily caused in the shrinkage while the film is heat-shrunk, or so-called "jumping up" is caused, which is not preferable. The lower limit value of the hot-water-temperature heat shrinkage rate in the width direction at 98°C is preferably 55% or more and particularly preferably 60% or more. The upper limit value of the hot-water-temperature heat shrinkage rate in the width direction at 98°C is particularly preferably 75% or less.

With respect to the heat shrinkable white polyester-based film of the present invention, the shrinkage stress in the width direction when the film is heated to 90°C is preferably 2 MPa or more and 18 MPa or less. When the shrinkage stress in the width direction upon heating the film to 90°C is less than 2 MPa, when the film is used as a label for a bottle, good shrunk appearance cannot be obtained since the film becomes loose and wrinkles easily occur, which is not preferable. Conversely, in a case where the shrinkage stress in the width direction when the film is heated to 90°C is more than 18 MPa, when the film is used as a label, distortion easily occurs during heat-shrinkage, which is not preferable. The lower limit value of the shrinkage stress in the width direction when the film is heated to 90°C is more preferably 4 MPa or more, further preferably 5 MPa or more, and particularly preferably 6 MPa or more. The upper limit value of the shrinkage stress in the width direction when the film is heated to 90°C is more preferably 15 MPa or less and particularly preferably 13 MPa or less.

Preferably, the tear strength in the longitudinal direction after the heat shrinkable white polyester-based film of the present invention is shrunk by 20% in the width direction in a 90°C hot-air oven is 1 N/mm or more and 50 N/mm or less, and the ratio between the tear strengths in the longitudinal direction and the width direction is 1 or more and 11 or less.

[Measurement method for tear strength]

The film is shrunk by 20% in the width direction for 20 seconds in a hot-air oven adjusted to 90°C, and then, a test piece having a predetermined size is sampled according to JIS-K-7128-2. Then, with respect to a test piece having a slit formed therein, tear resistance in the longitudinal direction and the width direction of the film is measured by an Elmendorf tear tester. Then, using the following formula 2, a tear strength per unit thickness is calculated.

$$\text{Tear strength} = \text{tear resistance (N)} / \text{thickness (mm)} \ldots \text{formula 2}$$

In addition, from the value of the tear strength after the film is shrunk by 20% in the width direction in a 90°C hot-air oven described above, a tear strength ratio is calculated using the following formula 3.

Tear strength ratio = tear strength in the longitudinal direction / tear strength in the width direction          formula 3

When the tear strength in the longitudinal direction after the film is shrunk by 20% in the width direction in the 90°C hot-air oven is less than 1 N/mm, a situation where, when the film is used as a label, the label is easily broken due to an impact such as a fall during transportation may occur, which is not preferable. Conversely, when the tear strength is more than 80 N/mm, resistance in the initial stage at the time of tearing the label becomes large, accordingly, the force required for cutting becomes large, and the film is cut off in the middle of cutting, i.e., easiness to tear becomes poor, for example, which is not preferable. The lower limit value of the tear strength is more preferably 4 N/mm or more and further preferably 6 N/mm or more. The upper limit value of the tear strength is more preferably 45 N/mm or less and further preferably 40 N/mm or less.

In a case where the tear strength ratio between the longitudinal direction and the width direction is 11 or more, when the film is used as a label, the label is relatively easily cut in the width direction. Thus, when the label is cut along the perforated line while being pulled in the longitudinal direction, the split deviates in the width direction, and the label is easily cut off in the middle of cutting, which is not preferable. Conversely, when the tear strength ratio is 1 or less, the film becomes very easy to be torn in the longitudinal direction, and a situation where the label is broken due to an impact such as a fall during transportation may easily occur, which is not preferable.

With respect to the heat shrinkable white polyester-based film of the present invention, when a tensile strength at fracture in the longitudinal direction is obtained by the method below, the tensile strength at fracture is preferably 60 MPa or more and 200 MPa or less.

[Measurement method for tensile strength at fracture]

A strip-shaped test piece having a predetermined size is prepared according to JIS-K7127, and both ends of the test piece are gripped by a universal tensile tester to perform a tensile test under a condition of a tensile speed of 200 mm/minute, whereby the strength (stress) at tensile fracture in the longitudinal direction of the film is calculated as a tensile strength at fracture.

When the tensile strength at fracture in the longitudinal direction is less than 60 MPa, "stiffness" when the film as a label is attached to a bottle or the like becomes weak, which is not preferable. Conversely, when the tensile strength at fracture is more than 200 MPa, cuttability (easiness to tear) in the initial stage when the label is torn becomes poor, which is not preferable. The lower limit value of the tensile strength at fracture is preferably 65 MPa or more, more preferably 70 MPa or more, and particularly preferably 80 MPa or more.

With respect to the perforated line openability of a heat shrinkable film, the present inventors studied the problem that the film is cut off in the middle of opening, and found the following. As for a film having poor openability, elongation of the film significantly decreases after the film is shrunk and attached as a label, and thus, the film is easily cut off. Meanwhile, as for a film whose openability has been improved in the present invention, decrease in elongation of the film is hardly observed. That is, as for the heat shrinkable white polyester-based film of the present invention, the tensile elongation at fracture in the longitudinal direction of the film, measured by the method below, that is obtained when the film is shrunk by 20% in the width direction in a hot-air oven adjusted to 90°C, and then a tensile test is performed under a condition of a tensile speed of 1000 mm/minute, needs to be 70% or more and 300% or less.

[Measurement method for tensile elongation at fracture after shrinkage]

After a film is shrunk by 20% in the width direction in a hot-air oven adjusted to 90°C, a strip-shaped test piece having a predetermined size is prepared according to JIS-K7127, and both ends of the test piece are gripped by a universal tensile tester to perform a tensile test under a condition of a tensile speed of 1000 mm/minute, whereby the elongation (strain) at tensile fracture in the longitudinal direction of the film is calculated as a tensile elongation at fracture.

In a case where the tensile elongation at fracture in the longitudinal direction after the film is shrunk by 20% in the width direction in a hot-air oven adjusted to 80°C is less than 70%, when the film is attached as a label and then the film is opened along the perforated line, the film is easily cut off in the middle of opening and cuttability becomes poor, which is not preferable. Conversely, it can be said that the larger the tensile elongation at fracture is, the more desirable since the film is less likely to be cut off in the middle of opening. However, with the method according to the present invention, 300% is the technological limit. The lower limit value of the tensile elongation at fracture is preferably 75% or more, more preferably 80% or more, and particularly preferably 90% or more.

The lower limit of the thickness of the heat shrinkable white polyester-based film of the present invention is preferably 10 μm or more from the viewpoint of obtaining necessary light cutting properties. Meanwhile, the upper limit is not limited in particular. However, if the thickness exceeds 300 μm, the weight of the film when used as a label becomes large, which is not economical and not preferable. In addition, when the heat shrinkable white polyester-based film of the present invention is caused to have a laminate structure, the thickness of the layer containing particles and voids in order to obtain light transmittance is preferably at least 5 μm. The thickness of each layer other than said layer is not limited in particular, but each layer preferably has a thickness of 2 μm or more.

In the present invention, the apparent specific gravity of the film is preferably 1.2 g/cm$^3$ or less, more preferably 1.15 g/cm$^3$ or less, and further preferably 1.1 g/cm$^3$ or less. That the film has a small apparent specific gravity and is light in weight is a big advantage in mass production, and the heat shrinkable white polyester-based film of the present invention having voids therein can realize preferable lightness in weight. In particular, since a lengthwise-transverse stretching method described below is adopted, a large area stretching ratio can be adopted as compared with a conventional uniaxially stretched film having voids, and further, a small apparent density can be obtained. However, when the apparent specific gravity is too small, the strength of the film itself is impaired. Therefore, the apparent specific gravity is preferably 0.9 g/cm$^3$ or more.

In the present invention, the total light transmittance needs to be 40% or less, and is preferably 35% or less, more preferably 30% or less, and further preferably 20% or less. A total light transmittance exceeding 40% may result in poor appearance, such as when the contents are seen through the film or the printed matter is difficult to be seen, which is not so preferable. With respect to the lower limit, a lower total light transmittance is preferable from the viewpoint of concealment of contents. However, when the number of particles becomes large, the specific gravity increases, and when the number of voids increases, the strength decreases. Therefore, the lower limit of the total light transmittance that can be achieved by the product according to the present invention is 10%.

In the heat shrinkable polyester-based film of the present invention, a ratio A1/A2 (hereinafter, absorbance ratio) of an absorbance A1 at 1340 cm$^{-1}$ relative to an absorbance A2 at 1410 cm$^{-1}$ of the heat shrinkable polyester-based film measured by a polarized ATR-FTIR method has to be 0.5 or more in the film main shrinkage direction (hereinafter, width direction), and has to be 0.3 or more and 0.65 or less in the direction (hereinafter, longitudinal direction) orthogonal to the main shrinkage direction.

The above absorbance ratio represents the trans conformation ratio of the molecular orientation. When devising the present invention, the present inventors conducted thorough studies on the orientation state of molecules where the tensile elongation at break under a condition of a tensile speed of 1000 mm/minute after the film is shrunk by 20% in the width direction becomes at least 50%. By changing the film formation condition, the present inventors found that there is a relationship between the trans conformation ratio and cuttability. That is, focusing on the molecular orientation (trans conformation ratio) in the film biaxially stretched in the longitudinal direction (MD direction) and the width direction (TD direction), the present inventors studied the trans conformation ratio in the longitudinal direction, with respect to what kind of molecular orientation exhibits suitable cuttability and satisfies necessary heat shrinkage properties, and arrived at the present invention.

That is, by changing the stretching temperature and the film formation condition in the longitudinal direction described later, the present inventors obtained an experimental result that change in the trans conformation ratio and cuttability are related to each other. The trans conformation is considered to represent the alignment state of molecular chains. It is considered that, if the trans conformation ratio is high, even when the film has been heat-shrunk in the width direction, the state where the molecular chains are aligned in the longitudinal direction is easily maintained, accordingly, tear is easily propagated along the molecular chains, and in addition, a state where the tensile elongation at fracture of the film is high is maintained, whereby perforated line cuttability is improved.

In the film longitudinal direction, the absorbance ratio has to be 0.3 to 0.65. When the absorbance ratio in the film width direction is less than 0.3, the molecular orientation is low, and thus, resistance at the time of tearing becomes large, and the perforated line cuttability tends to be deteriorated. The absorbance ratio is more preferably 0.32 or more and further preferably 0.35 or more. Meanwhile, when the absorbance ratio in the film longitudinal direction exceeds 0.65, the molecular orientation becomes too high, and thus, the film is easily broken due to an impact, and in addition, the heat shrinkage rate in the longitudinal direction becomes large. Accordingly, wrinkles and distortion are easily caused in the shrunk label. The absorbance ratio in the longitudinal direction is more preferably 0.57 or less and further preferably 0.55 or less.

Meanwhile, in the film width direction, the absorbance ratio is preferably 0.5 or more. When the absorbance ratio in the film width direction is less than 0.5, the molecular orientation is low, and thus, the shrinkage stress decreases and the film is easily loosened at the time of attachment. In addition, the heat shrinkage rate necessary as a heat shrinkable film is less likely to be exhibited. The absorbance ratio in the film width direction is more preferably 0.55 or more and further preferably 0.6 or more.

With respect to the heat shrinkable white polyester-based film of the present invention, the molecular orientation angle when the film width direction is defined as 0 degrees needs to be 15 degrees or less. The upper limit value of the molecular orientation angle is more preferably 13 degrees or less and further preferably 12 degrees or less. As for the lower limit, the closer to 0 degrees the molecular orientation angle is, the better.

In the present invention, when the longitudinal direction of the film is defined as an X-axis direction, the width direction of the film is defined as a Y-axis direction, and the thickness direction of the film is defined as a Z-axis direction, and when viewed on an XY-plane of the film, the direction in which the molecular orientation degree is largest is referred to as a molecular orientation axis. The molecular orientation angle means the angle by which the above molecular orientation axis is deviated from the film longitudinal direction or the film width direction. A measurement method for the molecular orientation angle is as follows. Rectangular samples are collected from one end to the other end in the width direction of the film. With respect to each cut out film sample, the molecular orientation angle (the angle of the molecular orientation axis direction) is measured by a molecular orientation angle measurement apparatus (MOA-6004) manufactured by Oji Scientific Instruments. As for the molecular orientation angle, the width direction of the film is defined as 0 degrees, and with respect to the width direction, when the direction of the above molecular orientation axis is smaller than 45 degrees, the difference from 0 degrees is obtained, and when the direction of the above molecular orientation axis is larger than 45 degrees, the difference from 90 degrees is obtained. With respect to each of the rectangular samples collected at end portions and at the center of the film, the molecular orientation angle is measured by the above method, and the difference in the molecular orientation angle between the end portions and the center portion is defined as a distortion index of the molecular orientation angle, as represented by the following formula 4.

Molecular orientation angle distortion index = (absolute value of difference in molecular orientation angle between samples collected from edges and center portion) ... formula 4

In the center portion in the width direction of the film, the molecular orientation angle is small, and thus, is usually 15° or less. Meanwhile, near the end portions of the film, the difference in the molecular orientation is large, and is more than 15°. The reason for this is as follows. In a case where an amorphous polyester film to be used in a heat shrinkable film is biaxially stretched in the order of lengthwise to transverse, when the film is preheated in order to stretch the film in the lengthwise direction (the longitudinal direction), and then in the transverse direction (the width direction) by a tenter, or the like, a strong shrinkage stress acts in the longitudinal direction, and thus, the molecular orientation angle tends to be distorted in a bow shape (bowing tends to be caused). In the present invention, this problem is improved by the method described later.

In order to satisfy the properties described above, the film of the present invention may be composed of a single layer. However, a preferable layer configuration has layers of at least two types, and a particularly preferable layer configuration is B/A/B where the layer A is a layer containing voids and the layer B is a layer containing fewer voids than the layer A. When the layer B serving as the surface layer does not contain voids, smoothness of the surface is improved, and missing dots are less likely to be caused during printing, and such a layer B is preferable in terms of aesthetic appearance at the time of printing. The thickness ratio between the layer A and the layer B is preferably A/B=1/1 or more, more preferably 2/1 or more, and further preferably 4/1 or more. When the thickness ratio is less than 111, realization of both of aesthetic appearance of printing and lowering the apparent density is difficult. Taking the layer configuration of B/A/B is also preferable for suppressing non-preferable curling after the shrinkage treatment.

The production method for the heat shrinkable white polyester-based film of the present invention is not limited in particular, and will be described with reference to an example. The heat shrinkable white polyester-based film of the present invention can be obtained as follows. A polyester-based raw material having ethylene terephthalate as a main component, and containing 13 mol% or more, in total, of one or more types of monomer components that can become an amorphous component in the entire polyester resin component is melt-extruded by an extruder to form an unstretched film, and the unstretched film is biaxially stretched and heat-treated by a predetermined method shown below. In order to obtain a laminated unstretched film as necessary, a plurality of resin composition raw materials may be co-extruded.

When a raw material resin is melt-extruded, a polyester-based raw material is preferably dried using a dryer such as a hopper dryer or a paddle dryer or using a vacuum dryer. After the polyester-based raw material is dried in such a manner, the material is melted at a temperature of 200 to 300°C and extruded in a film form using an extruder. For such extrusion, any existing method such as a T-die method or a tubular method can be used.

When a layer obtained by mixing a resin not compatible with the polyester is melt-extruded, the domain size of the non-compatible resin caused in the polyester is preferably controlled to be 0.1 $\mu$m or more and 50 $\mu$m or less. When the domain size is 0.1 $\mu$m, the void size caused by stretching becomes too small. Accordingly, the apparent specific gravity becomes large or necessary light transmittance cannot be obtained, which is not preferable. When the domain size is 50 $\mu$m or more, the void size becomes too large, and the degree of tensile elongation at break decreases, and the perforated line openability is deteriorated, which is not preferable. In order to uniformly disperse the non-compatible resin to control the domain size, it is preferable to perform melt-extrusion by using a kneading extruder having twin or more screws.

With respect to the layer obtained by mixing a resin not compatible with the polyester, the shape of the domain of the non-compatible resin in the unstretched film is preferably controlled so as to have a shape longer in the longitudinal direction than in the width direction or the thickness direction. When such a domain shape is taken, the shape of the voids that are caused after stretching can be a shape that is long in the longitudinal direction, and a tear is easily propagated along the longitudinal direction, whereby the perforated line openability can be improved. In order to control the domain shape, the ratio (draft ratio) of the speed of the cooling roll to the linear velocity of the melted resin extruded from the die is preferably 2 times or more and 20 times or less and more preferably 3 times or more and 15 times or less. When the draft ratio is 2 times or less, the non-compatible resin domain is not stretched in the longitudinal direction, and thus, a shape that is long in the longitudinal direction cannot be obtained. When the draft ratio is 20 times or more, neck-in becomes large, resulting in an increased thickness of the end portion. Accordingly, when the film is stretched in the longitudinal direction in the next step, the film is less likely to be uniformly stretched, and distortion of the orientation axis in the width direction becomes large, which is not preferable.

Further, it is preferable to obtain the heat shrinkable white polyester-based film of the present invention in the following manner. That is, as described later, the obtained unstretched film is stretched in the longitudinal direction under a predetermined condition, the lengthwise-stretched film is rapidly cooled, then, is subjected to heat treatment and relaxation treatment in the longitudinal direction, then, the heat-treated film is cooled under a predetermined condition, then, is stretched in the width direction under a predetermined condition, and then, is heat-treated again. In the following, a preferable film formation method for obtaining the heat shrinkable white polyester-based film of the present invention will be described in detail.

As described above, conventionally, a heat shrinkable polyester-based film has been produced by stretching an unstretched film only in a direction (i.e., the main shrinkage direction, usually, the width direction) in which the film is to be shrunk. The present inventors studied the conventional production method, and, as a result, found that the conventional production of a shrinkable polyester-based film had the following problem.

· By merely performing stretching in the width direction, the tear strength in the longitudinal direction becomes large, and the perforated line openability as a label becomes poor, as described above. In addition, it is difficult to increase the line speed of the film formation apparatus.
· When a method in which stretching is performed in the longitudinal direction and then stretching is performed in the width direction is adopted, although shrinkage force in the width direction can be exhibited, shrinkage force in the longitudinal direction is simultaneously exhibited. Thus, finish after the label is shrunk and attached becomes poor.
· When a method in which stretching is performed in the longitudinal direction, then heat treatment is performed, and then, stretching is performed in the width direction is adopted, although the heat shrinkage rate in the longitudinal direction can be reduced, the molecular orientation angle with respect to the width direction becomes large due to bowing as described above. Accordingly, distortion after the label is shrunk and attached is easily caused.

From the above findings, the present inventors came to consider that, in order to simultaneously satisfy good perforated line openability and shrinkage finish, while the molecular orientation in the film is oriented in the longitudinal direction, distortion in the molecular orientation angle due to stretching in the longitudinal direction needs to be reduced. As a result, by adopting the following means in the film production by the so-called lengthwise-transverse stretching method in which stretching is performed in the longitudinal direction and then in the width direction, a molecular state where molecules are oriented in the longitudinal direction and that does not contribute to the shrinkage force was realized, which made it possible to obtain a heat shrinkable white polyester-based film that simultaneously satisfies good perforated line openability and shrinkage finish, whereby the present inventors arrived at the present invention.

[Film formation method for heat shrinkable polyester-based film of the present invention]

The heat shrinkable polyester-based film of the present invention is formed according to the following procedure.

(1) Control of lengthwise stretching condition
(2) Intermediate heat treatment after lengthwise stretching
(3) Step of relaxation in the longitudinal direction
(4) Natural cooling (blocking of heating) between intermediate heat treatment and transverse stretching

(5) Forced cooling of film after natural cooling
(6) Control of transverse stretching condition
(7) Heat treatment after transverse stretching

In the following, each means will be sequentially described.

(1) Control of lengthwise stretching condition

In the production of the film by the lengthwise-transverse stretching method of the present invention, the lengthwise stretching needs to be performed such that stretching of 3.3 times or more and 5.0 times or less is realized with the stretching temperature set at Tg or higher and Tg+30°C or lower.
The lengthwise stretching of the present invention is preferably performed as multi-stage stretching having two or more stages, and, in particular, the stretching distance by which the film passes between stretching rolls in the first stage is preferably larger than that between stretching rolls in the second stage. The present inventors studied a stretch form that realizes both of suppression of the bowing phenomenon described before, i.e., reduction of the molecular orientation angle in the longitudinal direction, and improvement of the trans conformation ratio in the longitudinal direction. The present inventors found that, when the distance by which the film is stretched between rolls in the first half of stretching is increased, the yield point stress is decreased, which is advantageous in reduction of the distortion of the molecular orientation angle in the longitudinal direction, and when the distance by which the film is stretched between rolls in the second half of stretching is short, the reached stress of stretching is improved, which is advantageous in improvement of the trans conformation ratio. When stretching is performed in two stages, it is preferable to achieve balance between these. In particular, the stretching distance between rolls in the first half of stretching is preferably 150 mm or more and 500 mm or less, and the stretching distance between rolls in the second half of stretching is preferably adjusted in a range between 0.4 times and 0.8 times with respect to the distance between rolls in the first half. When stretching is performed in two stages, the stretching ratio in the first stage is preferably 1.2 times or more and 2.0 times or less, and the stretching ratio in the second stage is preferably 2.2 times or more and 3.5 times or less.
When stretching is performed in the lengthwise direction, if the total lengthwise stretching ratio is large, the trans conformation ratio in the longitudinal direction is improved, whereby the perforated line cuttability tends to be improved. However, if the lengthwise stretching ratio is too large, oriented crystallization of the film progresses after the lengthwise stretching, and break is easily caused in the transverse stretching step, which is not preferable. Therefore, the upper limit of the total lengthwise stretching ratio is 5.0 times. The lengthwise stretching ratio is more preferably 4.8 times or less and further preferably 4.4 times or less. Meanwhile, when the lengthwise stretching ratio is too small, although the heat shrinkage rate in the longitudinal direction becomes small, the trans conformation ratio in the longitudinal direction also becomes small. Accordingly, a tear in the longitudinal direction becomes large, the perforated line cuttability is easily deteriorated, and the tensile strength at fracture also becomes small, which is not preferable. The lengthwise stretching ratio is preferably 3.0 times or more, more preferably 3.2 times or more, and further preferably 3.3 times or more.

(2) Intermediate heat treatment after lengthwise stretching

In order to thermally relax molecules oriented in the longitudinal direction, heat treatment is performed after the lengthwise stretching. At this time, after performing lengthwise stretching on an unstretched film, it is necessary to perform heat treatment (hereinafter, referred to as intermediate heat treatment) at a temperature of Tg+40°C or higher and Tg+120°C or lower for a time of 6.0 seconds or more and 12.0 seconds or less in a state where both ends in the width direction of the film are gripped by clips in a tenter. By performing such intermediate heat treatment, the heat shrinkage rate in the longitudinal direction caused by the lengthwise stretching can be reduced.
The temperature of the intermediate heat treatment is more preferably Tg+40°C or higher and further preferably Tg+42°C or higher, and is more preferably Tg+110°C or lower and further preferably Tg+100°C or lower. When the temperature of the intermediate heat treatment is too high, molecular chains oriented due to the lengthwise stretching change into crystals, and a high heat shrinkage rate cannot be obtained after the transverse stretching. Meanwhile, the time of the intermediate heat treatment needs to be adjusted as appropriate in accordance with the raw material composition within a range of 6.0 seconds or more and 12.0 seconds or less. As for the intermediate heat treatment, the heat amount provided to the film is important. When the temperature of the intermediate heat treatment is low, intermediate heat treatment for a long time is necessary. However, too long a time of the intermediate heat treatment requires a huge facility, and thus, it is preferable to adjust the temperature and the time as appropriate.

(3) Step of relaxation in the longitudinal direction

In order to reduce the molecular orientation angle while allowing molecules oriented in the longitudinal direction by the lengthwise stretching to remain, relaxation with heat is preferably performed. With the provision of the step of relaxation, residual shrinkage stress in the longitudinal direction of the film after the lengthwise stretching can be reduced, distortion in the molecular orientation angle during the intermediate heat treatment or during stretching in the width direction can be maintained at a low level, and good shrinkage finish can be realized. In addition, the present inventors conducted studies regarding means, for controlling the tear strength and the tensile strength at fracture, in which, even when the film is allowed to relax in the longitudinal direction, if some molecular chains are allowed to remain in a state of being oriented in the longitudinal direction, the trans conformation ratio in the longitudinal direction can be maintained. Then, the present inventors found that the control is possible by performing either one or both of means (i) and (ii) shown below to allow the film to relax in the longitudinal direction.

(i) A step in which the film after the lengthwise stretching is heated at a temperature of Tg or higher and Tg+60°C or lower to perform relaxation of 10% or more and 50% or less in the longitudinal direction for a time of 0.05 seconds or more and 5 seconds or less by using rolls having speed difference. As the heating means, any of a heat regulation roll, near-infrared radiation, far-infrared radiation, and a hot-air heater can be used.

(ii) A step of performing relaxation of 10% or more and 40% or less in the longitudinal direction for a time of 0.1 seconds or more and 12 seconds or less by reducing the distance between opposing gripping clips in the tenter in the intermediate heat treatment step.

In the following, each step will be described.

(i) Relaxation after lengthwise stretching

Desirably, the film after the lengthwise stretching is heated at a temperature of Tg or higher and Tg+60°C or lower, to perform relaxation of 10% or more and 50% or less in the longitudinal direction for a time of 0.05 seconds or more and 5.0 seconds or less by using rolls having speed difference. When the temperature is lower than Tg, the film after the lengthwise stretching does not shrink, and relaxation cannot be performed, which is not preferable. Meanwhile, when the temperature is higher than Tg+60°C, the film undergoes crystallization, whereby transparency and the like become poor, which is not preferable. The film temperature during relaxation is more preferably Tg+10°C or higher and Tg+55°C or lower and further preferably Tg+20°C or higher and Tg+50°C or lower.

The time for which the relaxation in the longitudinal direction of the film after the lengthwise stretching is performed is preferably 0.05 seconds or more and 5 seconds or less. The time less than 0.05 seconds results in a short time of relaxation, and unless the temperature is made higher than Tg, uneven relaxation is caused, which is not preferable. When the time of relaxation is longer than 5 seconds, relaxation at a low temperature can be performed and there is no problem for the film, but a huge facility is required. Therefore, it is preferable to adjust the temperature and the time as appropriate. The relaxation time is more preferably 0.1 seconds or more and 4.5 seconds or less and further preferably 0.5 seconds or more and 4 seconds or less.

When the relaxation rate in the longitudinal direction of the film after the lengthwise stretching is less than 10%, relaxation of the molecular orientation in the longitudinal direction cannot be sufficiently performed, and the heat shrinkage rate in the longitudinal direction becomes high, which is not preferable. When the relaxation rate in the longitudinal direction of the film after the lengthwise stretching is larger than 50%, the tear strength in the longitudinal direction becomes large, and the perforated line cuttability is deteriorated, which is not preferable. The relaxation rate of the film after the lengthwise stretching is more preferably 15% or more and 45% or less and further preferably 20% or more and 40% or less.

(ii) Relaxation in intermediate heat treatment step

In the intermediate heat treatment step, it is desirable to perform relaxation of 20% or more and 40% or less in the longitudinal direction for a time of 0.1 seconds or more and 12 seconds or less by reducing the distance between opposing gripping clips in the tenter. When the relaxation rate is less than 20%, relaxation of the molecular orientation in the longitudinal direction cannot be sufficiently performed, and the heat shrinkage rate in the longitudinal direction becomes high, which is not preferable. When the relaxation rate is larger than 40%, the tear strength in the longitudinal direction becomes large, and the perforated line cuttability is deteriorated, which is not preferable. The relaxation rate is more preferably 22% or more and is more preferably 38% or less and further preferably 36% or less.

The time for which relaxation in the longitudinal direction is performed in the intermediate heat treatment step is preferably 0.1 seconds or more and 12 seconds or less. The time less than 0.1 seconds results in a short time of relaxation, and unless the temperature is made higher than Tg+40°C, uneven relaxation is caused, which is not preferable. When the relaxation time is longer than 12 seconds, there is no problem for the film, but a huge facility is required. Therefore, it is preferable to adjust the temperature and the time as appropriate. The relaxation time is more preferably 0.3 seconds or more and 11 seconds or less and further preferably 0.5 seconds or more and 10 seconds or less.

(4) Natural cooling (blocking of heating) between intermediate heat treatment and transverse stretching

In the production of the film by the lengthwise-transverse stretching method of the present invention, the intermediate heat treatment needs to be performed after the lengthwise stretching. After the lengthwise stretching and the intermediate heat treatment, it is necessary to cause the film to pass, for a time of 0.5 seconds or more and 3.0 seconds or less, through an intermediate zone where no positive heating operation is performed. That is, preferably, an intermediate zone is provided before a transverse stretching zone of the tenter for transverse stretching, the film after the intermediate heat treatment after the lengthwise stretching is guided to the tenter, and the film is caused to pass through this intermediate zone for a predetermined time, and then, subjected to forced cooling described later, to perform transverse stretching. In addition, in the intermediate zone, it is preferable to block an accompanying flow from the running of the film and hot air from the cooling zone such that, when a strip of paper is hung down in a state where the film is not caused to pass therethrough, the strip of paper is almost completely hung down in the vertical direction. When the time in which the film is caused to pass through the intermediate zone is less than 0.5 seconds, the transverse stretching becomes high temperature stretching, and the heat shrinkage rate in the transverse direction cannot be sufficiently increased, which is not preferable. Conversely, 3.0 seconds is sufficient as the time in which the film is caused to pass through the intermediate zone, and setting the time to be more than that wastes the facility, which is not preferable. The time in which the film is caused to pass through the intermediate zone is more preferably 0.7 seconds or more and further preferably 0.9 seconds or more, and is more preferably 2.8 seconds or less and further preferably 2.6 seconds or less.

(5) Forced cooling of film after natural cooling

In the production of the film by the lengthwise-transverse stretching method of the present invention, the naturally-cooled film is not directly subjected to transverse stretching, and positive forced cooling needs to be performed such that the temperature of the film becomes Tg or higher and Tg+40°C or lower. Through such forced cooling treatment, molecular chains oriented in the longitudinal direction are fixed, and it becomes possible to obtain a film having good perforated line openability when used as a label. The temperature of the film after the forced cooling is more preferably Tg+2°C or higher and further preferably Tg+4°C or higher, and is more preferably Tg+35°C or lower and further preferably Tg+30°C or lower.

In subjecting the film to the forced cooling, when the temperature of the film after the forced cooling remains higher than Tg+40°C, the heat shrinkage rate in the width direction of the film decreases, and shrinkage when the film is used as a label becomes insufficient. However, when the temperature of the film after the forced cooling is controlled to be Tg+40°C or lower, a large heat shrinkage rate in the width direction of the film can be maintained. When the temperature of the film after the forced cooling remains higher than Tg+40°C, the stress of the transverse stretching performed after the cooling becomes small, and the shrinkage stress in the width direction becomes small, whereby followability to the bottle becomes poor. When forced cooling is performed such that the temperature of the film after the cooling becomes Tg+40°C or lower, a large shrinkage stress in the width direction can be maintained.

(6) Control of transverse stretching condition

The transverse stretching needs to be performed such that a ratio of 3 times or more and 7 times or less is realized at a temperature of Tg+5°C or higher and Tg+40°C or lower, in a state where both ends in the width direction of the film are gripped by clips in a tenter. When the transverse stretching is performed under the predetermined condition, molecules are oriented in the width direction, thereby being able to exhibit a high shrinkage force in the width direction. Accordingly, a film having good perforated line openability when used as a label can be obtained. When the ratio of the transverse stretching is smaller than 3 times, the heat shrinkage rate in the width direction becomes small, and in addition, the stress on the film during stretching becomes small, and thus, large unevenness in thickness is easily caused, which is not preferable. Meanwhile, when the ratio of transverse stretching is larger than 7 times, the void size caused in the film becomes too large, whereby the apparent specific gravity decreases, and the mechanical strength of the film also decreases due to the voids, which is not preferable. The ratio of the transverse stretching is more preferably 3.5 times or more and further preferably 4 times or more, and is more preferably 6.5 times or less and further preferably 6 times or less. The temperature of the transverse stretching is more preferably Tg+10°C or higher and further preferably Tg+13°C or higher, and is more preferably Tg+37°C or lower and further preferably Tg+34°C or lower. When stretching is performed in the transverse direction, if the stretching temperature is higher than Tg+40°C, the heat shrinkage rate in the width direction becomes small. However, when the stretching temperature is controlled to be Tg+40°C or lower, the shrinkage rate in the width direction can be made large. When the stretching temperature is higher than Tg+40°C, the stress of the transverse stretching becomes small, and the shrinkage stress in the width direction becomes small, whereby followability to the bottle becomes poor. Through the control performed such that the transverse stretching temperature becomes Tg+40°C or lower, the shrinkage stress in the width direction can be made large. Further, when the temperature of the film is higher than Tg+40°C, the stretching stress of the transverse stretching decreases, and large unevenness in thickness in the width direction tends to be caused, which is not preferable.

Meanwhile, when the stretching temperature is less than Tg+5°C, the stress on the film during stretching becomes too large, the film is easily broken during the transverse stretching, and in addition, due to increase of the voids in the film, the apparent specific gravity of the film decreases, whereby the mechanical strength decreases, which is not preferable.

(7) Heat treatment (final heat treatment) after transverse stretching

The film after the transverse stretching needs to be finally heat treated at a temperature of Tg or higher and Tg+50°C or lower for a time of 1 second or more and 9 seconds or less, in a state where both ends in the width direction of the film are gripped by clips in a tenter. When the heat treatment temperature is higher than Tg+50°C, the heat shrinkage rate in the width direction decreases, and the heat shrinkage rate at 98°C becomes smaller than 50%, which is not preferable. When the heat treatment temperature is lower than Tg, the shrinkage stress caused by the stretching cannot be sufficiently relaxed, and the shrinkage stress becomes too high. Therefore, wrinkles and distortion are easily caused at the time of shrinkage finish. A longer heat treatment time is preferable, but too long a heat treatment time requires a huge facility, and thus, the heat treatment time is preferably set to 9 seconds or less.

EXAMPLES

In the following, the present invention will be specifically described with reference to Examples. However, the present invention is not limited to Examples.

[Absorbance ratio]

Using an FT-IR apparatus "FTS 60A/896" (manufactured by Varian Medical Systems, Inc.), an infrared absorption spectrum was measured under polarization by an ATR method, with measurement wavenumber region of 650 to 4000 cm-1 and 128 integration times. A ratio A1/A2 between absorbance A1 at 1340 cm-1 and absorbance A2 at 1410 cm-1 was defined as an absorbance ratio (trans conformation ratio).

[Heat shrinkage rate (hot water heat shrinkage rate)]

A film was cut into a square measuring 10 cm×10 cm and was immersed for 10 seconds in a no-load state in hot water at ±0.5°C of a predetermined temperature, to be heat-shrunk. Then, the resultant film was immersed for 10 seconds in water having a temperature of 25°C±0.5°C and was taken out of the water, to measure the dimensions in the lengthwise direction and the transverse direction of the film, and the respective heat shrinkage rates were obtained by the following formula (1). The direction in which the heat shrinkage rate was larger was determined as the main shrinkage direction.

Heat shrinkage rate = {(length before shrinkage-length after shrinkage)/length before shrink-age}×100(%)         formula 1

[Shrinkage stress]

A sample having a length of 200 mm in the main shrinkage direction and a width of 20 mm was cut out from a heat shrinkable film, and was measured by using a heating oven-equipped strength and elongation measuring instrument (TENSILON (registered trademark of ORIENTEC CO., LTD.)) manufactured by Toyo Baldwin (current name: ORIENTEC CO., LTD.). The heating oven was heated to 90°C in advance, and the distance between chucks was set to 100 mm. Blowing of the heating oven was temporarily stopped, the heating oven door was opened, the sample was attached to the chucks, and then, the heating oven door was immediately closed to resume the blowing. The shrinkage stress was measured for 30 seconds or more, the shrinkage stress (MPa) after 30 seconds was obtained, and the maximum value during the measurement was regarded as the shrinkage stress (MPa).

[Tear strength]

A film was cut so as to have a size of 150 mm in the longitudinal direction and 238 mm in the width direction. In a state where the film was fixed to a metal frame having a size of 190 mm in the width direction and 150 mm or more in the longitudinal direction, the film was put in a 90°C hot-air oven for 20 seconds to prepare a film shrunk by 20% in the width direction. Then, the resultant film was sampled as a test piece having a predetermined size according to JIS-K-7128-2.

Then, with respect to test pieces having a slit formed therein, tear resistance in the longitudinal direction and the width direction of the film was measured by using Elmendorf tear tester manufactured by Toyo Seiki.

[Tensile strength at fracture]

A strip-shaped test piece measuring 140 mm in the measurement direction (the film longitudinal direction) and 20 mm in the direction (the film width direction) orthogonal to the measurement direction was prepared. Using a universal tensile tester "DSS-100" (manufactured by SHIMADZU CORPORATION), while both ends of the test piece were gripped by 20 mm for each side by chucks (distance between chucks: 50 mm), a tensile test was performed under conditions of an ambient temperature of 23°C and a tensile speed of 200 mm/min, and the strength (stress) at tensile fracture was regarded as the tensile strength at fracture.

[Elongation at break after shrinkage]

A film was cut so as to have a size of 150 mm in the longitudinal direction and 238 mm in the width direction. In a state where the film was fixed to a metal frame having a size of 190 mm in the width direction and 150 mm or more in the longitudinal direction, the film was put in a 90°C hot-air oven for 20 seconds to prepare a film shrunk by 20% in the width direction. Then, a strip-shaped test piece measuring 100 mm in the measurement direction (the film longitudinal direction) and 20 mm in the direction (the film width direction) orthogonal to the measurement direction was prepared. Using a universal tensile tester "DSS-100" (manufactured by SHIMADZU CORPORATION), while both ends of the test piece were gripped by 20 mm for each side by chucks (distance between chucks: 30 mm), a tensile test was performed under conditions of an ambient temperature of 23°C and a tensile speed of 1000 mm/min, and the distortion (elongation) at tensile fracture was regarded as the elongation at break.

[Apparent specific gravity]

A film was cut out into a 10.0 cm square and used as a sample. The total thickness of this sample was measured at ten points at different locations using a micrometer with four significant figures and the average value of the total thicknesses was obtained. This average value was rounded to three significant figures, to obtain an average thickness t ($\mu$m) per sheet. A mass w (g) of the same sample was measured by using an automatic even balance with four significant figures, to obtain an apparent specific gravity by the following formula 5. The apparent specific gravity was rounded to three significant figures.

$$\text{Apparent specific gravity (g/cm}^3) = w/(10.0 \times 10.0 \times t \times 10^{-4}) = w \times 100/t \ \dots \ \text{formula 5}$$

[Distortion index of molecular orientation angle]

At opposing left and right edges in the width direction and at the center position in the width direction of the film, a sample measuring 140 mm $\times$ 100 mm = the longitudinal direction $\times$ the width direction was collected. Then, with respect to these three samples, a molecular orientation angle was measured by using a molecular orientation angle measurement apparatus (MOA-6004) manufactured by Oji Scientific Instruments.
Then, the absolute value of the difference in the molecular orientation angle of the respective samples collected from the edges and the film center position was calculated. Then, out of the absolute values of the difference at the left and right edges, the maximum value was calculated by formula 4 below, and regarded as a distortion index of the molecular orientation angle.
Molecular orientation angle distortion index = (absolute value of difference in molecular orientation angle between samples collected from edges and center portion) ... formula 4

[Total light transmittance]

In the case of a label on which printing was performed, a cloth was wetted with ethyl acetate, and the ink surface of the label was wiped off with the cloth. With respect to a label on which no printing was performed or from which ink has fallen off, a total light transmittance was obtained by NDH-1001DP manufactured by NIPPON DENSHOKU INDUSTRIES Co., Ltd.

[Shrinkage distortion of label]

Both end portions of a heat shrinkable film having a lattice pattern at a 10 mm interval in advance was adhered with dioxolane, whereby a cylindrical label (a label whose circumferential direction is the main shrinkage direction of the heat shrinkable film) was prepared. The label was put over a 500 ml PET bottle (body diameter: 62 mm, minimum diameter of the neck portion: 25 mm) and was caused to pass, in 2.5 seconds, through a steam tunnel (model: SH-1500-L) manufactured by Fuji Astec Inc. having a zone temperature of 95°C, whereby the label was heat-shrunk to be attached to the bottle. In the attachment, at the neck portion, a portion having a diameter of 40 mm was adjusted to be located at one end of the label. As evaluation of finish properties after shrinkage, the magnitude of deviation from the horizontal plane of the lattice pattern in a 360 degree-direction of the attached label body portion was measured as distortion, and the maximum value of the distortion was obtained. The evaluation was performed according to the criteria below.
Excellent: maximum distortion is less than 1.0 mm
Good: maximum distortion is 1.0 mm or more and less than 2.0 mm
Poor: maximum distortion is 2.0 mm or more

[Adhesion of label]

A label was attached to a PET bottle under the same condition as the condition for the shrinkage distortion of the label described above. Label adhesion was evaluated according to the criteria below.
Excellent: there is no sagging between the attached label and the PET bottle, and the label does not move when the cap portion of the bottle is fixed and the label is twisted.
Good: the label does not move when the cap portion of the bottle is fixed and the label is twisted, but there is some sagging between the label and the PET bottle.
Poor: when the cap portion of the bottle is fixed and the label is twisted, the label shifts.

[Wrinkles of label]

A label was attached to a PET bottle under the same condition as the condition for the shrinkage distortion of the label described above, and a state of occurrence of wrinkles was evaluated according to the criteria below.
Excellent: the number of wrinkles having a size of 2 mm or more is zero.
Good: the number of wrinkles having a size of 2 mm or more is one or more and two or less.
Poor: the number of wrinkles having a size of 2 mm or more is three or more.

[Perforated line openability]

A label having a perforated line made in the direction orthogonal to the main shrinkage direction in advance was attached to a PET bottle under the same condition as the condition for the shrinkage distortion of the label described above. The perforated line was formed by making holes having a length of 1 mm at an interval of 1 mm. Two perforated lines were provided over a width of 22 mm and a length of 120 mm in the lengthwise direction (height direction) of the label. Then, this bottle was filled with 500 ml of water and refrigerated to 5°C, and the perforated line of the label of the bottle immediately after being taken out of the refrigerator was torn with a fingertip. The number of labels that failed to be neatly torn along the perforated lines in the lengthwise direction, or the labels that were cut in the middle of tearing and failed to be removed from the bottle was counted, and a perforated line poor openability rate (%) with respect to the entire 50 samples was calculated. If the perforated line poor openability rate is 20% or less, the film is acceptable from a practical point of view.

<Preparation of polyester raw material>

In a stainless steel autoclave equipped with an agitator, a thermometer, and a partial circulation type cooler, 100 mol% of dimethyl terephthalate (DMT) as a dibasic acid component and 100 mol% of ethylene glycol (EG) as a glycol component were put such that the molar ratio of the glycol to the methyl ester was 2.2 times. Using zinc acetate as an ester exchange catalyst at a ratio of 0.05 mol% (to the acid component), an ester exchange reaction was carried out while methanol produced was being distilled out of the system. Then, antimony trioxide was added as a polycondensation catalyst at a ratio of 0.025 mol% (to the acid component), and polycondensation reaction was carried out under a condition of reduced pressure of 26.6 Pa (0.2 Toll) at 280°C, to obtain a polyester A having an intrinsic viscosity of 0.70 dl/g. This polyester is polyethylene terephthalate. By a method similar to the above, polyesters (B, C, D, E, F) shown in Table 1 were synthesized. In production of polyester F, SiO2 (SYLYSIA 266 manufactured by FUJI SILYSIA CHEMICAL LTD., average particle diameter: 1.5 $\mu$m) was added as a lubricant at a ratio of 7,000 ppm to the polyester. A polyester G was obtained by mixing, in a twin-screw extruder, the polyester A to which 50 weight% of titanium dioxide (TA-300 manufactured by FUJI TITANIUM INDUSTRY CO., LTD.) was added. In the tables, NPG denotes neopentylglycol, CHDM denotes 1,4-cyclohexanedimethanol, and DEG denotes diethylene glycol. As for the intrinsic viscosity, the polyester B had 0.76 dl/g, the polyester C had 0.75 dl/g, the polyester D had 0.73 dl/g, the polyester E had 0.68 dl/g, the polyester F had 0.70 dl/g, and the polyester G had 0.67 dl/g.

[Table 1]

| | Monomer composition (mol%) | | | | | | Lubricant addition amount [ppm] | Titanium oxide addition amount [wt%] |
|---|---|---|---|---|---|---|---|---|
| | Dicarboxylic acid component | Diol component | | | | | | |
| | DMT | EG | NPG | CHDM | DEG | BD | | |
| Polyester A | 100 | 100 | 0 | 0 | 0 | 0 | 0 | 0 |
| Polyester B | 100 | 70 | 30 | 0 | 0 | 0 | 0 | 0 |
| Polyester C | 100 | 70 | 0 | 30 | 0 | 0 | 0 | 0 |
| Polyester D | 100 | 70 | 0 | 0 | 30 | 0 | 0 | 0 |
| Polyester E | 100 | 0 | 0 | 0 | 0 | 100 | 0 | 0 |
| Polyester F | 100 | 100 | 0 | 0 | 0 | 0 | 7000 | 0 |
| Polyester G | 100 | 100 | 0 | 0 | 0 | 0 | 0 | 50 |

[Example 1]

The polyester A, the polyester B, the polyester D, and the polyester F described above were mixed at a weight ratio of 5:60:30:5 to obtain a raw material of the layer B. The raw material of the layer A was obtained by, when the polyester B, the polyester D, and the polyester G were mixed at a weight ratio of 55:25:20, further mixing 6 weight% of a polystyrene resin (G797N manufactured by Japan Polystyrene Inc.) thereto. The raw materials of the layer A and the layer B were respectively put into separate twin-screw extruders, mixed, and melted. The resultant matters were joined in a feed block to be melt-extruded by a T-die at 280°C, and the resultant matter was wound around a rotating metal roll cooled so as to have a surface temperature of 30°C at a draft ratio of 5 times, and then was rapidly cooled, whereby an unstretched film having a laminate structure of B/A/B having a thickness of 336 $\mu$m was obtained (B/A/B=68 $\mu$m/200 $\mu$m/68 $\mu$m). The take-off speed (rotation speed of the metal roll) of the unstretched film at this time was about 20 m/min. Tg of the unstretched film was 67°C.

The unstretched film obtained as described above was guided to a lengthwise stretching machine in which a plurality of roll groups were continuously arranged, and using the difference in rotation speed of the rolls, the film was stretched in two stages in the lengthwise direction. That is, the film was preheated on a heated roll until the film temperature became 85°C, and then was stretched 1.4 times with a stretching distance of 200 mm by using the difference in rotation speed between a low-speed rotation roll set so as to have a surface temperature of 80°C and a medium-speed rotation roll set so as to have a surface temperature of 80°C. Further, the lengthwise stretched film was lengthwise stretched 2.9 times with a stretching distance of 120 mm, by using the difference in rotation speed between a medium-speed rotation roll set so as to have a surface temperature of 80°C and a high-speed rotation roll set so as to have a surface temperature of 80°C (therefore, the total lengthwise stretching ratio was 4.06 times).

The film immediately after the lengthwise stretching was put into a heating oven. The inside of the heating oven was heated by a hot-air heater, and the set temperature was 95°C. Using the difference in speed between rolls at the inlet and the outlet of the heating oven, a 30% relaxation treatment was performed in the longitudinal direction. The time of the relaxation was 0.6 seconds.

The film immediately after the lengthwise stretching above was forcedly cooled at a cooling speed of 40°C/second by a cooling roll (high-speed roll positioned immediately after a lengthwise stretching roll in the second stage) set to have a surface temperature of 30°C. Then, the cooled film was guided to a tenter, and was caused to continuously pass through an intermediate heat treatment zone, a first intermediate zone (natural cooling zone), a cooling zone (forced cooling zone), a second intermediate zone, a transverse stretching zone, and a final heat treatment zone. In the tenter, the length of the first intermediate zone was set to about 40 cm, and a shielding plate was provided between the intermediate heat treatment zone and the first intermediate zone, between the first intermediate zone and the cooling zone, between the cooling zone and the second intermediate zone, and between the second intermediate zone and the transverse stretching zone. Further, in the first intermediate zone and the second intermediate zone, hot air from the intermediate heat treatment zone, cooling air from the cooling zone, and hot air from the transverse stretching zone were blocked such that, when a strip of paper was hung down in a state where the film was not caused to pass therethrough, the strip of paper was almost completely hung down in the vertical direction. In addition, during feeding of the film, the distance between the film and the shielding plate was adjusted such that most of the accompanying flow from the flow of the film was blocked by the shielding plate provided between the intermediate heat treatment zone and the first intermediate zone. In addition, during feeding of the film, the distance between the film and the shielding plate was adjusted such that, at the boundary between the intermediate heat treatment zone and the first intermediate zone and at the boundary between the cooling zone and the second intermediate zone, most of the accompanying flow from the flow of the film was blocked by the shielding plate.

Then, the lengthwise stretched film guided to the tenter was firstly heat-treated for 5.0 seconds at a temperature of 170°C in the intermediate heat treatment zone, and then the film after the intermediate heat treatment was guided to the first intermediate zone and caused to pass through the zone (passing time=about 1.0 second), to be naturally cooled. Then, the film after the natural cooling was guided to the cooling zone, and positively cooled by blowing low-temperature air until the surface temperature of the film became 100°C. Then, the cooled film was guided to the second intermediate zone and caused to pass through the zone (passing time=about 1.0 second), to be naturally cooled again. Further, the film having passed through the second intermediate zone was guided to the transverse stretching zone, was preheated until the surface temperature of the film became 85°C, and then was stretched 4.0 times in the width direction (transverse direction) at 85°C.

Then, the film after the transverse stretching was guided to the final heat treatment zone, was heat treated for 5.0 seconds at a temperature of 85°C in the final heat treatment zone, and then was cooled. Then, both edge portions were cut to be removed and the resultant film having a width of 500 mm was wound into a roll, whereby an about 30 $\mu$m-biaxially stretched film was continuously produced for a predetermined length. Then, properties of the obtained film and label were evaluated by the method described above. The above production conditions are shown in Table 2 and the evaluation results are shown in Table 3.

[Example 2]

The polyester raw materials were mixed in a weight ratio of 5:60:30:5 for the polyester A, the polyester C, the polyester D, and the polyester F to obtain a raw material of the layer B. The raw material of the layer A was obtained by mixing at a weight ratio of 55:25:20 for the polyester C, the polyester D, and the polyester G. Except for this modification, the same melt-extrusion process as in Example 1 was followed. The lengthwise stretching was also performed using the same method as in Example 1, resulting in a biaxially stretched film with a width of 500 mm and a thickness of 30 $\mu$m. The above production conditions are shown in Table 2 and the evaluation results are shown in Table 3.

[Example 3]

Except for changing the raw material for the A layer by adding 6% by weight of polypropylene (FO-50F Grand Polymer) instead of 6% by weight of polystyrene resin, the same melt-extrusion process as in Example 1 was followed. The same method for the lengthwise stretching, the natural cooling, the forced cooling, the transverse stretching, and the final heat treatment was performed as in Example 1, resulting in a biaxially stretched film with a width of 500 mm and a thickness of 30 $\mu$m. The above production conditions are shown in Table 2 and the evaluation results are shown in Table 3.

[Example 4]

The same polyester raw materials as in Example 1 were melt-extruded in the same manner as in Example 1 and lengthwise stretching was performed as in Example 1, then a 40% relaxation treatment in the longitudinal direction was performed in the heating oven setting at 95°C. Except for this modification, the natural cooling, the forced cooling, the transverse stretching, and the final heat treatment were conducted in the same manner as in Example 1, resulting in a biaxially stretched film with a width of 500 mm and a thickness of 30 $\mu$m. The above production conditions are shown in Table 2 and the evaluation results are shown in Table 3.

[Example 5]

The same polyester raw materials as in Example 1 were melt-extruded in the same manner as in Example 1 and lengthwise stretching was performed as in Example 1, then a 50% relaxation treatment in the longitudinal direction was performed in the heating oven setting at 95°C. Except for this modification, the natural cooling, the forced cooling, the transverse stretching, and the final heat treatment were conducted in the same manner as in Example 1, resulting in a biaxially stretched film with a width of 500 mm and a thickness of 30 $\mu$m. The above production conditions are shown in Table 2 and the evaluation results are shown in Table 3.

[Example 6]

The same polyester raw materials as in Example 1 were melt-extruded in the same manner as in Example 1 and lengthwise stretching was performed as in Example 1, then a 20% relaxation treatment in the longitudinal direction was performed in the heating oven setting at 95°C. Except for this modification, the natural cooling, the forced cooling, the transverse stretching, and the final heat treatment were conducted in the same manner as in Example 1, resulting in a biaxially stretched film with a width of 500 mm and a thickness of 30 μm. The above production conditions are shown in Table 2 and the evaluation results are shown in Table 3.

[Example 7]

The same polyester raw materials as in Example 1 were melt-extruded in the same manner as in Example 1 and lengthwise stretching was performed as in Example 1, then a 30% relaxation treatment in the longitudinal direction was performed at the intermediate heat treatment. Except for this modification, the natural cooling, the forced cooling, the transverse stretching, and the final heat treatment were conducted in the same manner as in Example 1, resulting in a biaxially stretched film with a width of 500 mm and a thickness of 30 μm. Thus, the relaxation rate in the longitudinal direction of the film is 30% in total. The above production conditions are shown in Table 2 and the evaluation results are shown in Table 3.

[Example 8]

The same polyester raw materials as in Example 1 were melt-extruded in the same manner as in Example 1 and lengthwise stretching was performed as in Example 1, then a 20% relaxation treatment in the longitudinal direction was performed in the heating oven setting at 95°C, followed by a 10% relaxation treatment at the intermediate heat treatment. Except for this modification, the natural cooling, the forced cooling, the transverse stretching, and the final heat treatment were conducted in the same manner as in Example 1, resulting in a biaxially stretched film with a width of 500 mm and a thickness of 30 μm. Thus, the relaxation rate in the longitudinal direction of the film is 30% in total. The above production conditions are shown in Table 2 and the evaluation results are shown in Table 3.

[Example 9]

The same polyester raw materials as in Example 1 were melt-extruded in the same manner as in Example 1 and lengthwise stretching was performed as in Example 1, then the intermediate heat treatment was performed at 130°C. Except for this modification, the natural cooling, the forced cooling, the transverse stretching, and the final heat treatment were conducted in the same manner as in Example 1, resulting in a biaxially stretched film with a width of 500 mm and a thickness of 30 μm. The above production conditions are shown in Table 2 and the evaluation results are shown in Table 3.

[Example 10]

The same polyester raw materials as in Example 1 were melt-extruded in the same manner as in Example 1 and lengthwise stretching was performed as in Example 1, then the intermediate heat treatment was performed at 170°C. Except for this modification, the natural cooling, the forced cooling, the transverse stretching, and the final heat treatment were conducted in the same manner as in Example 1, resulting in a biaxially stretched film with a width of 500 mm and a thickness of 30 μm. The above production conditions are shown in Table 2 and the evaluation results are shown in Table 3.

[Example 11]

The same polyester raw materials as in Example 1 were melt-extruded in the same manner as in Example 1 and lengthwise stretching was performed as in Example 1, then the natural cooling, the forced cooling, and the transverse stretching were conducted in the same manner as in Example 1. The final heat treatment was changed to 105°C, resulting in a biaxially stretched film with a width of 500 mm and a thickness of 30 μm. The above production conditions are shown in Table 2 and the evaluation results are shown in Table 3.

[Comparative Example 1]

Extrusion was carried out in the same manner as in Example 1, resulting in an unstretched film with a thickness of

165 μm. This unstretched film was then fed into a tenter, where it was preheated until the surface temperature of the film became 80°C, and then stretched 5.5 times in the width direction (transverse direction) at 76°C, resulting in a uniaxially stretched film with a width of 500 mm and a thickness of 30 μm. The above production conditions are shown in Table 2 and the evaluation results are shown in Table 3.

Although the shrinkage finish was satisfactory, the film was prone to cut off during perforation cutting due to the lack of longitudinal stretching, resulting in poor cutting properties.

[Comparative Example 2]

The same polyester raw materials as in Example 1 were melt-extruded in the same manner as in Example 1 and the film was stretched in two stages in the lengthwise direction using the difference in rotation speed of the rolls. That is, the unstretched film was preheated on a preheating roll until the film temperature became 85°C, and then was stretched 1.4 times by using the difference in rotation speed between a low-speed rotation roll set so as to have a surface temperature of 80°C and a medium-speed rotation roll set so as to have a surface temperature of 80°C. Further, the lengthwise stretched film was lengthwise stretched 1.4 times by using the difference in rotation speed between a medium-speed rotation roll set so as to have a surface temperature of 90°C and a high-speed rotation roll set so as to have a surface temperature of 80°C (therefore, the total lengthwise stretching ratio was 3.64 times). For the subsequent steps, except for the absence of relaxation after stretching, changing the intermediate heat treatment temperature to 160°C, and changing the transverse stretching temperature to 95°C, the processes of natural cooling, forced cooling, transverse stretching, and final heat treatment were conducted in the same manner as in Example 1, resulting in a biaxially stretched film with a width of 500 mm and a thickness of 30 μm. The production conditions are shown in Table 2 and the evaluation results are shown in Table 3. Due to the absence of longitudinal relaxation, the film exhibited significant molecular orientation angle distortion, resulting in many distortions and wrinkles during the shrinkage finishing process, making it less practical.

[Comparative Example 3]

The polyester raw materials were mixed in a weight ratio of 5:60:30:5 for the polyester A, the polyester B, the polyester E, and the polyester F to obtain a raw material of the layer B. The raw material of the layer A was obtained by mixing at a weight ratio of 10:80:10 for the polyester A, the polyester B, and the polyester E, and 10% by weight of polystyrene resin (G797N, Nippon Polystyrene) and 10% by weight of titanium dioxide (TA-300, Fuji Titanium) were added during the mixing process. Except for these changes, the melt extrusion was carried out in the same manner as in Comparative Example 2, and the lengthwise stretching was performed using the same method as in Comparative Example 1, resulting in a biaxially stretched film with a width of 500 mm and a thickness of 30 μm. The production conditions are shown in Table 2 and the evaluation results are shown in Table 3. Similar to Comparative Example 2, due to the absence of longitudinal relaxation, the film exhibited significant molecular orientation angle distortion, resulting in many distortions and wrinkles during the shrinkage finishing process, making it less practical.

[Comparative Example 4]

The same polyester raw materials as in Example 1 were melt-extruded in the same manner as in Example 1 and the film was stretched in one stage in the lengthwise direction using the difference in rotation speed of the rolls. That is, the unstretched film was preheated on a preheating roll until the film temperature became 85°C, and then was stretched 4.0 times with a stretching distance of 120 mm, by using the difference in rotation speed between a low-speed rotation roll set so as to have a surface temperature of 80°C and a high-speed rotation roll set so as to have a surface temperature of 80°C. For the subsequent steps, the processes of natural cooling, forced cooling, transverse stretching, and final heat treatment were conducted in the same manner as in Example 1, resulting in a biaxially stretched film with a width of 500 mm and a thickness of 30 μm. The production conditions are shown in Table 2 and the evaluation results are shown in Table 3. Although the shrinkage finish was satisfactory, the film exhibited significant molecular orientation angle distortion due to the one-stage stretching, resulting in many distortions and wrinkles during the shrinkage finishing process, making it less practical.

[Table 2A]

| | Layer configuration | Layer thickness ratio | Layer | Polyester resin composition | Polystyrene addition amount [wt%] | Polypropylene addition amount [wt%] | Titanium dioxide addition amount [wt%] | Amorphous component [mol%] | Tg [°C] |
|---|---|---|---|---|---|---|---|---|---|
| Example 1 | B/A/B | 2/6/2 | A | B/D/G=55/25/20 | 6 | 0 | 10 | 20 | 67 |
| | | | B | A/B/D/F=5/60/30/5 | 0 | 0 | 0 | 27 | |
| Example 2 | B/A/B | 2/6/2 | A | C/D/G=55/25/20 | 6 | 0 | 10 | 20 | 69 |
| | | | B | A/C/D/F=5/60/30/5 | 0 | 0 | 0 | 27 | |
| Example 3 | B/A/B | 2/6/2 | A | B/D/G=55/25/20 | 0 | 6 | 10 | 20 | 67 |
| | | | B | A/B/D/F=5/60/30/5 | 0 | 0 | 0 | 27 | |
| Example 4 | B/A/B | 2/6/2 | A | B/D/G=55/25/20 | 6 | 0 | 10 | 20 | 67 |
| | | | B | A/B/D/F=5/60/30/5 | 0 | 0 | 0 | 27 | |
| Example 5 | B/A/B | 2/6/2 | A | B/D/G=55/25/20 | 6 | 0 | 10 | 20 | 67 |
| | | | B | A/B/D/F=5/60/30/5 | 0 | 0 | 0 | 27 | |
| Example 6 | B/A/B | 2/6/2 | A | B/D/G=55/25/20 | 6 | 0 | 10 | 20 | 67 |
| | | | B | A/B/D/F=5/60/30/5 | 0 | 0 | 0 | 27 | |
| Example 7 | B/A/B | 2/6/2 | A | B/D/G=55/25/20 | 6 | 0 | 10 | 20 | 67 |
| | | | B | A/B/D/F=5/60/30/5 | 0 | 0 | 0 | 27 | |
| Example 8 | B/A/B | 2/6/2 | A | B/D/G=55/25/20 | 6 | 0 | 10 | 20 | 67 |
| | | | B | A/B/D/F=5/60/30/5 | 0 | 0 | 0 | 27 | |
| Example 9 | B/A/B | 2/6/2 | A | B/D/G=55/25/20 | 6 | 0 | 10 | 20 | 67 |
| | | | B | A/B/D/F=5/60/30/5 | 0 | 0 | 0 | 27 | |
| Example 10 | B/A/B | 2/6/2 | A | B/D/G=55/25/20 | 6 | 0 | 10 | 20 | 67 |
| | | | B | A/B/D/F=5/60/30/5 | 0 | 0 | 0 | 27 | |
| Example 11 | B/A/B | 2/6/2 | A | B/D/G=55/25/20 | 6 | 0 | 10 | 20 | 67 |
| | | | B | A/B/D/F=5/60/30/5 | 0 | 0 | 0 | 27 | |
| Comparative Example 1 | B/A/B | 2/6/2 | A | B/D/G=55/25/20 | 10 | 0 | 10 | 20 | 67 |
| | | | B | A/B/D/F=5/60/30/5 | 0 | 0 | 10 | 27 | |

EP 4 470 771 A1

| | Layer configuration | Layer thickness ratio | Layer | Polyester resin composition | Polystyrene addition amount [wt%] | Polypropylene addition amount [wt%] | Titanium dioxide addition amount [wt%] | Amorphous component [mol%] | Tg [°C] |
|---|---|---|---|---|---|---|---|---|---|
| Comparative Example 2 | B/A/B | 2/6/2 | A | B/D/G=55/25/20 | 6 | 0 | 10 | 20 | 67 |
| | | | B | A/B/D/F=5/60/30/5 | 0 | 0 | 0 | 27 | |
| Comparative Example 3 | B/A/B | 2/6/2 | A | AB/E=10/80/10 | 10 | 0 | 10 | 19 | 67 |
| | | | B | A/B/E/F=5/80/10/5 | 0 | 0 | 0 | 24 | |
| Comparative Example 4 | B/A/B | 2/6/2 | A | B/D/G=55/25/20 | 6 | 0 | 10 | 20 | 67 |
| | | | B | A/B/D/F=5/60/30/5 | 0 | 0 | 0 | 27 | |

[Table 2B]

| | Lengthwise stretching step | | | | | Intermediate heat treatment | | | Total relaxa-tion rate [%] | Longitudi-nal direction actual stretching ratio [times] | Film surface temperature after cooling step [°C] | Transverse stretching step | | |
|---|---|---|---|---|---|---|---|---|---|---|---|---|---|---|
| | Preheat-ing tempera-ture [°C] | First stage stretch-ing ratio [times] | Second stage stretch-ing ratio [times] | Total stretch-ing ratio [times] | Relaxa-tion rate in anneal-ing step [%] | Tempera-ture [°C] | Time [sec-ond] | Relaxa-tion rate [%] | | | | Stretching tempera-ture [°C] | Stretch-ing ratio [times] | Final heat treatment tempera-ture [°C] |
| Example 1 | 85 | 1.4 | 2.9 | 4.06 | 30 | 150 | 5 | 0 | 30 | 2.84 | 100 | 85 | 4 | 85 |
| Example 2 | 85 | 1.4 | 2.9 | 4.06 | 30 | 150 | 5 | 0 | 30 | 284 | 100 | 85 | 4 | 85 |
| Example 3 | 85 | 1.4 | 2.9 | 4.06 | 30 | 150 | 5 | 0 | 30 | 2.84 | 100 | 85 | 4 | 85 |
| Example 4 | 85 | 1.4 | 2.9 | 4.06 | 40 | 150 | 5 | 0 | 40 | 244 | 100 | 85 | 4 | 85 |
| Example 5 | 85 | 1.4 | 2.9 | 4.06 | 50 | 150 | 5 | 0 | 50 | 2.03 | 100 | 85 | 4 | 85 |
| Example 6 | 85 | 1.4 | 2.9 | 4.06 | 20 | 150 | 5 | 0 | 20 | 3.25 | 100 | 85 | 4 | 85 |
| Example 7 | 85 | 1.4 | 2.9 | 4.06 | 0 | 150 | 5 | 30 | 30 | 2.84 | 100 | 85 | 4 | 85 |
| Example 8 | 85 | 1.4 | 2.9 | 4.06 | 20 | 150 | 5 | 10 | 28 | 292 | 100 | 85 | 4 | 85 |
| Example 9 | 85 | 1.4 | 2.9 | 4.06 | 30 | 130 | 5 | 0 | 30 | 2.84 | 100 | 85 | 4 | 85 |
| Example 10 | 85 | 1.4 | 2.9 | 4.06 | 30 | 170 | 5 | 0 | 30 | 284 | 100 | 85 | 4 | 85 |
| Example 11 | 85 | 1.4 | 2.9 | 4.06 | 30 | 150 | 5 | 0 | 30 | 2.84 | 100 | 85 | 4 | 105 |
| Compara-tive Exam-ple 1 | without stretching | | | | | without heat treatment | | | | | | 75 | 5.5 | 76 |
| Compara-tive Exam-ple 2 | 85 | 2.6 | 1.4 | 3.64 | 0 | 160 | 5 | 0 | 0 | 3.64 | 100 | 95 | 4 | 85 |
| Compara-tive Exam-ple 3 | 85 | 2.6 | 1.4 | 3.64 | 0 | 160 | 5 | 0 | 0 | 3.64 | 100 | 95 | 4 | 85 |
| Compara-tive Exam-ple 4 | 85 | - | 4 | 4 | 30 | 150 | 5 | 0 | 30 | 2.8 | 100 | 85 | 4 | 85 |

[Table 3A]

| | 98°C shrinkage rate [%] | | Shrinkage stress [MPa] | Tensile strength at fracture [MPa] | Trans conformation index (absorbance ratio) | | Apparent specific gravity [g/cm³] | Total light transmittance [%] |
|---|---|---|---|---|---|---|---|---|
| | Longitudinal direction | Width direction | Width direction | Longitudinal direction | Longitudinal direction | Width direction | | |
| Example 1 | 8 | 70 | 13 | 102 | 0.46 | 0.86 | 1 | 31 |
| Example 2 | 9 | 69 | 12 | 105 | 0.47 | 0.84 | 1 | 30 |
| Example 3 | 8 | 70 | 11 | 93 | 0.46 | 0.87 | 0.9 | 28 |
| Example 4 | 4 | 68 | 10 | 77 | 0.40 | 0.84 | 1.1 | 33 |
| Example 5 | 2 | 66 | 8 | 63 | 0.32 | 0.82 | 1.2 | 34 |
| Example 6 | 12 | 71 | 14 | 124 | 0.62 | 0.89 | 1.1 | 31 |
| Example 7 | 5 | 67 | 11 | 96 | 0.55 | 0.89 | 1 | 32 |
| Example 8 | 3 | 69 | 8 | 74 | 0.43 | 0.83 | 1.2 | 33 |
| Example 9 | 5 | 63 | 10 | 94 | 0.49 | 0.85 | 1 | 31 |
| Example 10 | 2 | 71 | 10 | 94 | 0.62 | 0.89 | 1.1 | 31 |
| Example 11 | 7 | 53 | 5 | 91 | 0.46 | 0.86 | 1 | 31 |
| Comparative Example 1 | 1 | 66 | 5 | 43 | 0.11 | 0.73 | 1.1 | 31 |
| Comparative Example 2 | 7 | 65 | 18 | 184 | 0.72 | 0.86 | 0.8 | 27 |
| Comparative Example 3 | 5 | 63 | 17 | 205 | 0.73 | 0.84 | 0.8 | 27 |
| Comparative Example 4 | 9 | 69 | 10 | 88 | 0.60 | 0.80 | 1 | 31 |

EP 4 470 771 A1

[Table 3B]

| | Tear propagation strength after 20% shrinkage [N/mm] | | | Elongation at break after 20% shrinkage [%] | Molecular orientation angle distortion [°] | Shrinkage finish evaluation | | | |
|---|---|---|---|---|---|---|---|---|---|
| | Longitudinal direction | Width direction | Longitudinal /width ratio | Longitudinal direction | | Shrinkage distortion | Adhesion | Wrinkles | Poor perforated line rate [%] |
| Example 1 | 20 | 10 | 2.0 | 259 | 9 | good | excellent | good | 6 |
| Example 2 | 21 | 11 | 1.9 | 240 | 8 | good | excellent | good | 4 |
| Example 3 | 19 | 10 | 1.9 | 234 | 9 | good | excellent | good | 6 |
| Example 4 | 26 | 6 | 4.3 | 224 | 6 | excellent | excellent | excellent | 10 |
| Example 5 | 39 | 4 | 9.8 | 91 | 4 | excellent | excellent | good | 16 |
| Example 6 | 16 | 13 | 1.2 | 165 | 13 | good | excellent | good | 4 |
| Example 7 | 20 | 10 | 2.0 | 255 | 7 | excellent | excellent | excellent | 8 |
| Example 8 | 28 | 7 | 4.0 | 230 | 8 | excellent | good | good | 8 |
| Example 9 | 20 | 10 | 2.0 | 200 | 9 | excellent | good | excellent | 6 |
| Example 10 | 21 | 10 | 2.1 | 220 | 7 | good | excellent | good | 8 |
| Example 11 | 19 | 9 | 2.1 | 191 | 7 | good | good | good | 10 |
| Comparative Example 1 | 111 | 6 | 18.5 | 21 | 3 | excellent | good | good | 52 |
| Comparative Example 2 | 9 | 10 | 0.9 | 96 | 23 | poor | good | poor | 14 |
| Comparative Example 3 | 10 | 10 | 1.0 | 105 | 22 | poor | good | poor | 9 |
| Comparative Example 4 | 68 | 6 | 11.3 | 61 | 18 | poor | good | poor | 10 |

INDUSTRIAL APPLICABILITY

The heat shrinkable white polyester-based film of the present invention has excellent properties such as easy perforated line cuttability, light cutting properties, and lightness in weight, and thus, can be suitably used as a label for bottles.

**Claims**

1.  A heat shrinkable white polyester-based film comprising a polyester-based resin having ethylene terephthalate as a main constituent component and containing one or more monomer components that can become amorphous components in an amount of 13 mol% or more of in an entire polyester resin composition, and satisfying the following requirements (1) to (6):

    (1) the film has a hot water heat shrinkage rate of 0% or more and 15% or less in a longitudinal direction of the film when treated in 98°C hot water for 10 seconds;
    (2) the film has a hot water heat shrinkage rate of 50% or more and 80% or less in a width direction of the film when treated in 98°C hot water for 10 seconds;
    (3) the film has a trans conformation ratio of 0.3 or more and 0.65 or less in a longitudinal direction, which is a non-shrinkage direction of the film, when a ratio A1/A2 of an absorbance A1 at 1340 cm$^{-1}$ relative to an absorbance A2 at 1410 cm$^{-1}$ of the heat shrinkable polyester-based film measured by a polarized ATR-FTIR method is defined as a trans conformation ratio;
    (4) the film has a total light transmittance of 10% or more and 40% or less;
    (5) the film has a tensile elongation at break in the longitudinal direction at 1000 mm/min of 70% or more and 300% or less after the film is shrunk by 20% in the width direction in a hot-air oven;
    (6) the film has a distortion index of the molecular orientation angle of 0 degrees or more and 15 degrees or less.

2.  The heat shrinkable white polyester-based film according to claim 1, wherein

    the film has a tear propagation strength in the longitudinal direction of 50 N/mm or less after the film is shrunk by 20% in the width direction in a hot-air oven and
    the film has a ratio between tear propagation strengths in the longitudinal direction and the width direction of 1.0 or more and 11.0 or less after the film is shrunk by 20% in the width direction in a hot-air oven.

3.  The heat shrinkable white polyester-based film according to claim 1 or 2, wherein
    the film has a tensile strength at fracture in the longitudinal direction of 60 MPa or more and 200 MPa or less.

4.  The heat shrinkable white polyester-based film according to any one of claims 1 to 3, wherein
    the film has a shrinkage stress in the width direction of 2 MPa or more and 18 MPa or less.

5.  The heat shrinkable white polyester-based film according to any one of claims 1 to 4, wherein
    the film has an apparent specific gravity of 0.9 cm$^3$ or more and 1.3 g/cm$^3$ or less.

6.  A label comprising the heat shrinkable white polyester-based film according to any one of claims 1 to 5 as a base material, wherein the label is provided with perforations or a pair of notches.

7.  A packaging body formed by covering at least a part of outer periphery of an object with the label according to claim 6 followed by thermally shrinking the label.

## INTERNATIONAL SEARCH REPORT

| International application No. |
| --- |
| **PCT/JP2023/001765** |

| A. | CLASSIFICATION OF SUBJECT MATTER |
| --- | --- |

*B32B 27/00*(2006.01)i; *B32B 27/36*(2006.01)i; *B65D 75/62*(2006.01)i; *B29C 61/02*(2006.01)i; *B29C 61/06*(2006.01)i; *C08J 9/00*(2006.01)i; *C08J 5/18*(2006.01)i
FI:  B29C61/06; B29C61/02; B32B27/00 H; B32B27/36; B65D75/62 B; C08J5/18 CFD; C08J9/00 A CET

According to International Patent Classification (IPC) or to both national classification and IPC

| B. | FIELDS SEARCHED |
| --- | --- |

Minimum documentation searched (classification system followed by classification symbols)

B32B27/00; B32B27/36; B65D75/62; B29C61/02; B29C61/06; C08J9/00; C08J5/18

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2017-177677 A (TOYOBO CO., LTD.) 05 October 2017 (2017-10-05)<br>    entire text, all drawings | 1-7 |
| A | JP 2009-226934 A (TOYO BOSEKI) 08 October 2009 (2009-10-08)<br>    entire text, all drawings | 1-7 |
| A | WO 2014/199787 A1 (TOYOBO CO., LTD.) 18 December 2014 (2014-12-18)<br>    entire text, all drawings | 1-7 |
| A | JP 2019-147954 A (TOYOBO CO., LTD.) 05 September 2019 (2019-09-05)<br>    entire text, all drawings | 1-7 |

☐ Further documents are listed in the continuation of Box C.  ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **07 February 2023** | **28 March 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2023/001765**

| Patent document cited in search report | | | Publication date (day/month/year) | Patent family member(s) | | Publication date (day/month/year) |
|---|---|---|---|---|---|---|
| JP | 2017-177677 | A | 05 October 2017 | US 2019/0337272 A1 entire text, all drawings<br>WO 2017/170495 A1<br>EP 3437834 A1<br>CN 108883570 A<br>KR 10-2018-0129808 A | | |
| JP | 2009-226934 | A | 08 October 2009 | US 2011/0008607 A1 entire text, all drawings<br>WO 2009/107591 A1<br>EP 2258538 A1<br>KR 10-2010-0137464 A<br>CN 101970212 A | | |
| WO | 2014/199787 | A1 | 18 December 2014 | US 2016/0137833 A1 entire text, all drawings<br>EP 3009253 A1<br>CN 105307837 A<br>KR 10-2016-0018653 A | | |
| JP | 2019-147954 | A | 05 September 2019 | (Family: none) | | |

Form PCT/ISA/210 (patent family annex) (January 2015)

28

**REFERENCES CITED IN THE DESCRIPTION**

**Patent documents cited in the description**

- JP 6519720 B

- JP 5637272 B